# EUROPEAN PATENT SPECIFICATION

(11) **EP 1 543 727 B1**
(45) Date of publication and mention of the grant of the patent: **21.03.2007**
(21) Application number: 03029259.3
(22) Date of filing: 19.12.2003
(51) Int. Cl.: A23C 19/16, B65D 75/68

(54) **Wax-coated cheese**
Wachsbeschichterer Käse
Fromage enrobe de cire

(43) Date of publication of application: 22.06.2005
(73) Proprietor: Kraft Foods R & D, Inc. Zweigniederlassung München, 81737 München (DE)
(72) Inventor: Westermann, Werner, 82008 Unterhaching (DE); Kempter, Klaus, 85354 Freising (DE); Rupp, Ludwig, 6911 Lochau (AT)
(74) Representative: Morf, Jan Stefan

(56) References cited:
- EP-A- 0 949 158
- FR-A- 1 388 048
- FR-A- 2 604 340
- US-A- 2 187 734
- PATENT ABSTRACTS OF JAPAN vol. 0080, no. 67 (C-216), 29 March 1984 (1984-03-29) & JP 58 220650 A (MEIJI NIYUUGIYOU KK; others: 01), 22 December 1983 (1983-12-22)

## Description

### FIELD OF THE INVENTION

The present invention relates to wax-coated cheese, a new coating/opening system and a process for making same.

### DESCRIPTION OF THE PRIOR ART

In many consumer packaging applications, it is important to prevent air or water or the like from passing out of or into the package containing certain products. This is particularly true with respect to cheese packages for which the contained product must be kept in a constant environment to prevent spoilage and deterioration. In order to preserve the integrity and safety of such a cheese product contained within such a package, the periphery of the package must be hermetically sealed.

It is known from various prior art documents to protect cheese against surface deterioration as caused principally by the formation of mould, by means of a surrounding film consisting of an impermeable flexible coating material such as wax, covering the cheese to be protected and in which is embedded a strip of which one or two ends protrude from the outer surface of the surrounding envelope, thereby enabling the cheese to be disengaged from the envelope after said strip has been removed.

Such cheese products and processes for making same are for example described in French Patent No. 1,388,048.

The entire packaging process in which the cheese is covered with the protecting wax layer and with the tear strip must take place under the strict hygiene conditions required to extend shelf-life, which is complicated and expensive.

There is a need for a packaging system and a process for packaging cheese in a less complicated and less expensive manner.

### SUMMARY OF THE INVENTION

The present invention provides a wax-coated cheese comprising
(a) a cheese portion,
(b) a first inner wax layer covering said cheese portion,
(c) a second outer wax layer covering said first inner layer,
(d) a tear strip between said first inner and second outer wax layers covering selected parts of said first inner wax layer and comprising a portion which protrudes from said first inner and second outer wax layers and comprising an adhesive layer for adhering said tear strip to said first inner layer.

In preferred embodiments of the invention said first inner wax layer is uncolored and/or said second outer wax layer is colored.

In a further preferred embodiment of the invention said tear strip comprises a plurality of holes throughout through which said first inner and second outer wax layers are firmly connected.

The cheese may be natural cheese, processed cheese, cream or fresh cheese or any other type of cheese. The preferred cheese is processed cheese.

The cheese portion may have any desired form and is preferably triangular.

The invention also provides a corresponding packaging system useful for packaging a processed cheese portion.

In one preferred embodiment of this invention, the tear strip surrounds all three side walls of the triangular processed cheese portion and has one protruding portion.

In another preferred embodiment, the tear strip is provided at the two elongated side walls of the triangular processed cheese portion and has one or two protruding portions.

In still another embodiment, the tear strip is provided at the top and at one elongated side wall of the processed cheese portion and has one protruding portion.

Furthermore, the invention provides a process for packaging a cheese portion comprising
(a) providing a cheese portion with a first inner wax layer,
(b) placing a tear strip with its adhesive layer over selected parts of said first inner wax layer wherein said tear strip comprises a portion which protrudes from said first inner wax layer,
(c) applying a second outer wax layer onto said first inner wax layer and said tear strip.

In a preferred embodiment of he invention said tear strip has a plurality of holes throughout and step (c) is carried out under conditions which allow said first inner and second outer wax layers to melt together and form a firm connection throughout said holes of said tear strip.

### BRIEF DESCRIPTION OF THE DRAWINGS

- Fig. 1a: is perspective side view of a triangular cheese portion covered with a first inner wax layer which is surrounded on its side walls with a preferred tear strip having a plurality of holes and one protruding tear strip portion;
- Fig. 1b: is a perspective side view of the embodiment of Fig. 1a which is covered with a second outer wax layer;
- Fig. 1c: is a perspective side view of the embodiment of Fig. 1b which is opened at two sides after tearing the tear strip;
- Figs. 2a to 2c: are perspective side views of another embodiment corresponding to Fig. 1a to 1c with a preferred tear strip on the two elongated side walls of the cheese portion having a plurality of holes and one protruding tear strip portion;
- Figs. 3a to 3c: are perspective side views of another embodiment of the present invention with a preferred tear strip on top and on one elongated side wall of the processed cheese portion having a plurality of holes and one protruding tear strip portion.

### DETAILED DESCRIPTION OF THE INVENTION

The present invention relates to cheese and a new packaging system which is useful for packaging cheese. The key advantage of this new packaging system is the avoidance of carrying out the entire packaging process under the strict hygiene conditions required to extend shelf-life.

The cheese portions are simply covered under those strict hygiene conditions with one preferably uncolored wax layer and all of the remaining packaging steps, i.e. fixing the tear strip onto the first inner wax layer and applying the second outer wax layer, can than be effected under less strict hygiene conditions, which is most advantageous.

Preferred embodiments of the invention will now be explained with respect to the drawings.

The cheese may be any known type of cheese, e.g. natural cheese, processed cheese or cream or fresh cheese. Preferably it is processed cheese.

As mentioned above, the cheese portion to be packaged can have any desired form but is preferably triangular.

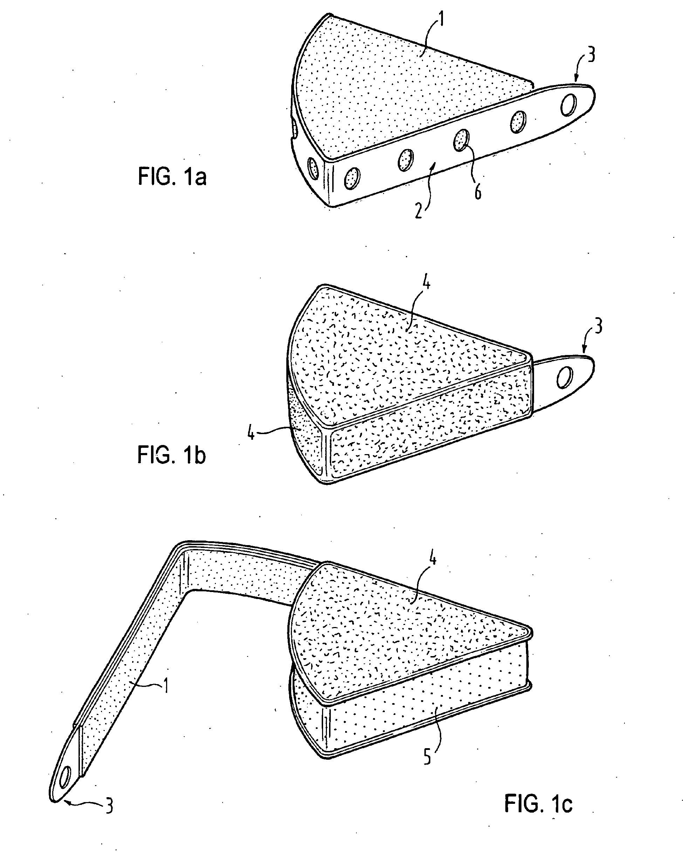

Fig. 1a shows in a perspective view a cheese portion 5 which is covered with a first inner wax layer 1 and which is surrounded on all of its three side walls with a tear strip 2 which has a portion 3 which protrudes from the tip of the cheese portion 5 and which has as a preferred embodiment a plurality of holes 6 along its length. The tear strip 2 has been fixed onto the first inner wax layer 1 by means of an adhesive.

Fig. 1b shows the embodiment of Fig. 1a which has been covered with a second outer wax layer 4. The application of the second outer wax layer 4 is carried out under conditions which lead to a melting together of the two wax layers 1, 4 so that they can easily be separated from the cheese portion 5. The two wax layers 1, 4 also melt together through the holes 6 of the tear strip 2 so that it is firmly embedded between the two wax layers 1,4 and allows an acurate opening of the outer wax layer 4 along the lines of the tear strip 2. The same applies to the first inner wax layer 1 which firmly adheres to the tear strip 2 by means of the adhesive with which it has been fixed onto the first inner wax layer 1 and by means of the holes 6 of the tear strip 2 through which the two wax layers 1, 4 have been melted together. As mentioned above, the holes in the tear strip relate to a preferred embodiment of the invention and are not necessary to carry out the invention. Normally, the adhesive layer on the tear strip is sufficient to form a firm connection to the first inner way layer 1.

Fig. 1c shows the same embodiment which has been opened by tearing away the tear strip 2 from two sides of the triangular cheese portions. It can be seen that the inner side of the tear strip 2 is covered with the first inner wax layer 1 which has been torn away from the cheese portion 5 and the tear strip 2 can be easily and completely separated by further tearing the tear strip 2 from the third side wall of the cheese portion 5. Finally, the top and the bottom comprising the second outer wax layer 4 and the attached first inner wax layer 1 can then easily be separated, and the cheese portion 5 is ready for consumption.

If the tear strip 2 has holes, the second outer wax layer 4 is applied under conditions which lead to a melting together of the first inner wax layer 1 and the second outer wax layer 4 and the melting together also takes place through the holes of the tear strip 2, so that the tear strip 2 is firmly fixed between the first inner and second outer wax layers 1, 4, so that the tearing away of the tear strip 2 takes with it the corresponding parts of the first inner wax layer 1 and the second outer way layer 4.

After detaching the top and bottom portions of the second outer wax layer 4 to which the first inner wax layer 1 firmly adheres, the cheese portion 5 is ready for consumption.

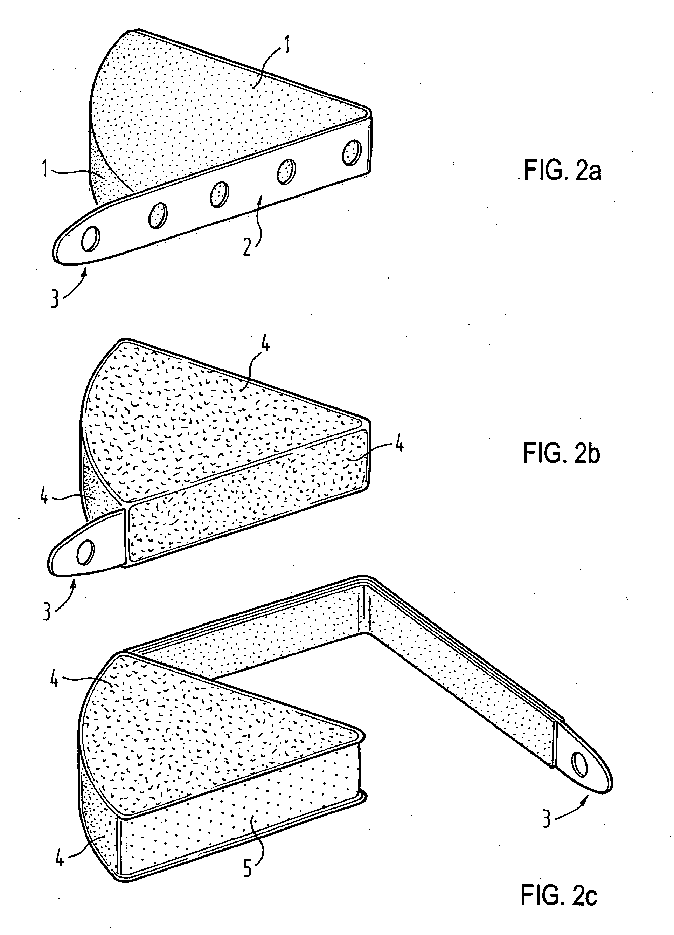

A similar embodiment is shown in a perspective view in Fig. 2a to 2c. The tear strip 2 is fixed only to the two elongated side walls of the cheese portion 5 covered with the first inner wax layer 1 but it has one protruding tear strip portion so that it can be opened by pulling the tear strip portion 3 towards and around the tip of the cheese portion 5. Then, the top and bottom portions of the outer wax layer 4 can be opened and the cheese portion 5 is ready for consumption.

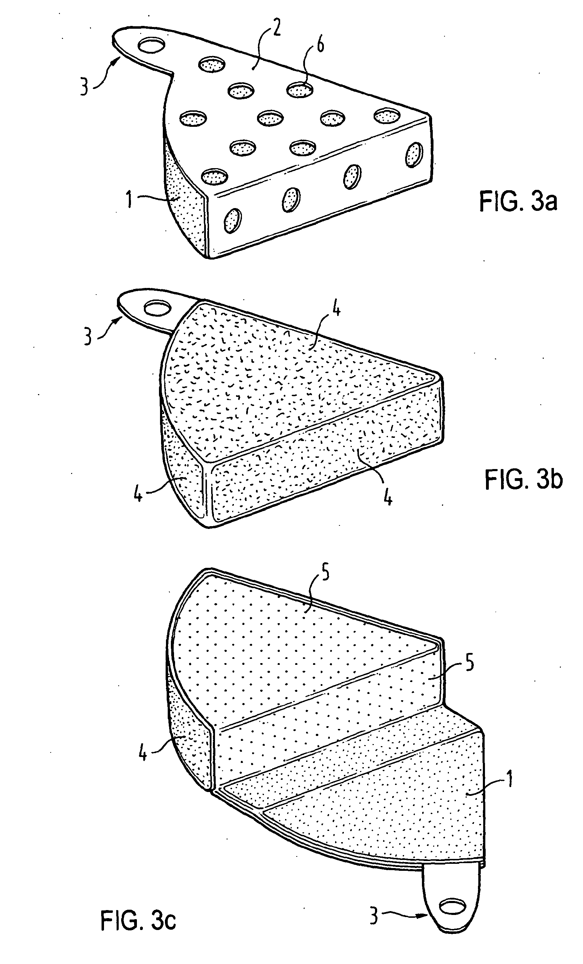

A further preferred embodiment of the invention is shown in Figs. 3a to 3c. Here, the top and one side wall of the cheese portion 5 are covered with the tear strip 2 which, again, has as a preferred embodiment a plurality of holes 6 throughout and one protruding portion 3.

The situation after tearing away tear strip 2 is shown in Fig. 3c. The top portion of the cheese portion 2 and one of the elongated side walls are separated from the package and the cheese portion 5 can be taken out of the package and consumed.

The process for packaging cheese according to the present invention will now be illustrated in more detail. The process will be described with respect to process cheese. However, as mentioned above, the present invention is usefull for any typ of cheese.

As a separate first production step hot and liquid process cheese is filled into casings and cooled down. These casings with process cheese can be stored for several days before proceeding with the following production steps.

After removal of the casing the firm process cheese sausage is cut into slices (preferably round) and each slice is cut into portions 5 (preferably 6 portions 5 triangularly shaped). Due to this cutting operation the preferred triangle portion 5 consits of 2 straight sides and 1 rounded side. After the cutting these cheese portions 5 (triangularly shaped) are placed separately on a conveyor belt. Automatically by transporting on belts and rolls the portions 5 are passing a waxing station. The wax is hot and liquid and will cover the portions 5 completely (preferably the wax is sprayed onto the top and bottom of the portion 5) with a thin first inner wax layer 1 which might be optionally colored. These production steps beginning from the removal of the casing until the first wax layer 1 have to be done under clean room environment. After these production steps it is possible to take out the waxed process cheese portions and store the portions (preferable under refringeration) for several days.

The following steps can be done without clean room condition. The pre-waxed process cheese portions, either from the storage or directly coming out of the first waxing step, are passing a standard label applicator which adds a self adhesive label with or without holes onto the first inner wax layer 1.
Here are some options how to apply the label. Further label shapes and label positioning on the first inner layer wax 1 are possible.
1. Option: the self adhesive label is a rectangular lengthy tear strip 2 with or without holes 6 which is applied onto the two sides of the first inner wax layer 1 with a protruding portion 3 (opening handle) on the tip of the triangle (figures 1.a-c).
2. Option: the self adhesive label is a rectangular lengthy tear strip 2 with or without holes 6 which is applied to the two long sides of the first inner wax layer 1 with a protruding portion 3 close to the round side the triangle (figures 2.a-c).
3. Option: the self adhesive label, nearly triangularly shaped with or without holes 6 is applied to the top side and to one of the long sides of the first inner wax layer 1. The protruding portion 3 is positioned at a corner of the round side the triangle (figures 3.a-c).

After the label placement onto the process cheese portion the portion is passing again automatically by transporting on belts and rolls a second waxing station. This wax is also hot and liquid and will cover the portions completely (preferable the wax is sprayed onto the top and bottom of the portion) with a thin second outer layer 4 which might be optionally colored. The self adhesive label is designed such that a part of the label is a protruding portion 3 standing away from the process cheese portion and this part is foreseen to be used as the opening handle.

After cooling each waxed process cheese portion can be further packed. Potential options of packing are wrapping, netting, flow packing or packing into other packaging. The preferred option is wrapping into a thin pre-printed plastic film with an automatic wrapping machine.

The present invention will now be illustrated by a specific example which, however, is not intended to limit the scope of the invention.

### EXAMPLE

Process cheese is filled into sausage casings of approximately 1 meter length and a diameter of 98 mm. After cooling, the sausage casing is removed and cheese slices with a thickness of approximately 14 mm are cut. 6 process cheese portions 5 are cut out of each round slice with a diameter of 98 mm. The dimension of one triangle cheese portion 5 equals a segment with a 49 mm radius, an angle of 60° and a height of 14 mm. The weight per triangle is approx. 20 g, 6 pieces are 120 g. Each triangle is passing a wax bath (white wax, - 85°C) where the first transparent inner wax layer 1 is added. This wax is a blend of hydrocarbon based waxes and plastics. The triangle portion 5 is moving forward on rolls and the wax is sprayed from the top and from the bottom side to ensure that it is completely covered by wax. Approximately 1.5 g wax (∼ 0.1 - 0.2 mm thickness) is added. These operatons are done in a clean room (according to class 10.000 US Fed. Standard 209 D). The following next operations are done at "normal environmental conditions". After the wax bath the triangle portion 5 is cooling down to temperatures of about 20°C by passing a cooling cell (cold air circulation). Each portion 5 is maintained (by belts) in a defined horizontal direction on the conveyor belt. One side of the triangle is in the direction of the tear strip applicator. The tear strip applicator (standard equipment, PAGO company is applying a self adhesive tear strip 2 which is made of polypropylene and coated with an adhesive layer. The rectangular tear strip 2 (preferred embodiment) contains holes 6 (preferably round, but also any other shape is possible). With the aid of the adhesive one side of the tear strip 2 is fixed on the inner wax layer 1. By passing a roll the other side of the label is pressed onto the inner wax layer 1. The tear strip 2 is added according figure 2 with one protruding portion 3 (opening handle). Each triangle is passing then a second wax bath (blue wax, ∼ 75°C) where a second outer wax layer 4 is added. This wax is a blend of hydrocarbon based waxes, plastics and blue pigments. Approximately 3.0 g blue wax (∼ 0.2 - 0.4 mm thickness) is added. The triangle portion is moving forward on rolls and the wax is sprayed from the top and from the bottom side to ensure that it is completely covered by wax. As the tear strip 2 contains holes the second outer wax layer 4 is partially melting the first inner wax layer 1 in the area of the holes. This results in good removal of the 2 wax layers 1, 4 by pulling off the tear strip 2. After the wax bath the triangle portions are kept refrigerated (∼ 4°C) before they will be ready for adding a secondary packaging (e.g. cellophane wrapper).

## Claims

1. Wax-coated cheese comprising
(a) a cheese portion (5),
(b) a first inner wax layer (1) covering said cheese portion (5),
(c) a second outer wax layer (4) covering said first inner wax layer (1),
(d) a tear strip (2) between said first inner and second outer wax layers (1, 4) covering selected parts of said first inner wax layer (1) and comprising at least one portion (3) which protrudes from said first inner and second outer wax layers (1, 4) and comprising an adhesive layer for adhering said tear strip (2) to said first inner wax layer (1).

2. Wax-coated cheese according to claim 1, wherein said tear strip (2) comprises a plurality of holes (6) throughout through which said first inner and second outer wax layers (1, 4) are firmly connected.

3. Wax-coated cheese according to claims 1 or 2, wherein the cheese is processed cheese.

4. Wax-coated cheese according to any one of claims 1 to 3, wherein said first inner wax layer (1) is uncolored.

5. Wax-coated cheese according to any one of claims 1 to 4, wherein said second outer wax layer (4) is colored.

6. Wax-coated cheese according to any one of claims 1 to 5, wherein said cheese portion (5) has a triangular form.

7. Wax-coated cheese according to claim 6, wherein said tear strip (2) is provided on the three side walls of said cheese portion (5) and has one protruding portion (3).

8. Wax-coated cheese according to claim 6, wherein said tear strip (2) is provided at the two elongated side walls of said cheese portion (5) and has one or two protruding portions (3).

9. Wax-coated cheese according to claim 6, wherein the tear strip (2) is provided at the top and at one elongated side wall of the processed cheese portion (5) and has one protruding portion (3).

10. Packaging system for packaging a cheese portion (5) comprising
(a) a first inner wax layer (1) covering said cheese portion (5),
(b) a second outer wax layer (4) covering said first inner wax layer (1),
(c) a tear strip (2) between said first inner and second outer wax layers (1, 4) covering selected parts of said first inner wax layers (1) and comprising at least one portion (3) which protrudes from said first inner and second outer wax layers (1, 4) and comprising an adhesive layer for adhering said tear strip (2) to said first innere wax layer (1).

11. Packaging system according to claim 10, wherein said tear strip (2) comprises a plurality of holes (6) throughout through which said first inner and second outer wax layers (1, 4) are firmly connected.

12. Packaging system according to claims 10 or 11 for packaging processed cheese.

13. Packaging system according to any one of claims 10 to 12, wherein said first inner wax layer (1) is uncolored.

14. Packaging system according to any one of claims 10 to 13, wherein said outer wax layer (4) is colored.

15. Packaging system according to any one of claims 10 to 14, wherein said packaging system has a triangular form.

16. Packaging system according to claim 15, wherein said tear strip (2) is provided on the three side walls of said processed cheese portion (5) and has one protruding portion (3).

17. Packaging system according to claim 11, wherein said tear strip (2) is provided on the two elongated side walls of said processed cheese portion (5) and has one or two protruding portions (3).

18. Packaging system according to claim 15, wherein said tear strip (2) is provided on the top and at one elongated side wall of the processed cheese portion (5) and has one protruding portion (3).

19. Process for packaging a cheese portion (5) comprising
(a) providing a cheese portion (5) with a first inner wax layer (1),
(b) placing a tear strip (2) over selected parts of said first inner wax layer (1) wherein said tear strip (2) comprises at least one portion (3) which protrudes from said first inner wax layer (1) and wherein said tear strip (2) has an adhesive layer for adhering said tear strip (2) to said first inner wax layer (2),
(c) applying a second outer wax layer (4) onto said first inner wax layer (1) and said tear strip (2).

20. Process according to claim 19, wherein said tear strip (2) has a plurality of holes (6) throughout and wherein step (c) is carried out under conditions which allow said first inner and second outer wax layers (1, 4) to melt together and form a firm connection through said holes (6) of said tear strip (2).

21. Process according to claims 19 or 20, wherein said cheese portion (5) is a processed cheese portion (5).

22. Process according to any one of claims 19 to 21, wherein said first inner wax layer (1) is uncolored.

23. Process according to any one of claims 19 to 22, wherein said second outer wax layer (4) is colored.

24. Process according to any one of claims 19 to 23, wherein said processed cheese portion (5) has a triangular form.

25. Process according to claim 24, wherein said tear strip (2) is provided on the three side walls of said processed cheese portion (5) and has one protruding portion (3).

26. Process according to claim 24, wherein said tear strip (2) is provided on the two elongated side walls of said processed cheese portion (5) and has one or two protruding portions (3).

27. Process according to claim 24, wherein said tear strip (2) is provided on the top and at one elongated side wall of the processed cheese portion (5) and has one protruding portion (3).

## Patentansprüche

1. Wachsbeschichteter Käse, umfassend
(a) einen Käseteil (5),
(b) eine erste innere Wachsschicht (1), die den Käseteil (5) bedeckt,
(c) eine zweite äußere Wachsschicht (4), die die erste innere Wachsschicht (1) bedeckt,
(d) einen Aufreißstreifen (2) zwischen der ersten inneren und zweiten äußeren Wachsschicht (1, 4), der ausgewählte Teile der ersten inneren Wachsschicht (1) bedeckt und mindestens einen Teil (3) umfasst, der von der ersten inneren und zweiten äußeren Wachsschicht (1, 4) vorsteht, und der eine Haftschicht zum Haften des Aufreißstreifens (2) an der ersten inneren Wachsschicht (1) umfasst.

2. Wachsbeschichteter Käse nach Anspruch 1, bei dem der Aufreißstreifen (2) überall eine Mehrzahl von Löchern (6) umfasst, durch die die erste innere und zweite äußere Wachsschicht (1, 4) fest verbunden sind.

3. Wachsbeschichteter Käse nach den Ansprüchen 1 oder 2, wobei der Käse Schmelzkäse ist.

4. Wachsbeschichteter Käse nach einem der Ansprüche 1 bis 3, bei dem die erste innere Wachsschicht (1) ungefärbt ist.

5. Wachsbeschichteter Käse nach einem der Ansprüche 1 bis 4, bei dem die zweite äußere Wachsschicht (4) gefärbt ist.

6. Wachsbeschichteter Käse nach einem der Ansprüche 1 bis 5, bei dem der Käseteil (5) eine Dreiecksform aufweist.

7. Wachsbeschichteter Käse nach Anspruch 6, bei dem der Aufreißstreifen (2) auf den drei Seitenwänden des Käseteils (5) bereitgestellt wird und einen vorstehenden Teil (3) aufweist.

8. Wachsbeschichteter Käse nach Anspruch 6, bei dem der Aufreißstreifen (2) an den zwei langgestreckten Seitenwänden des Käseteils (5) bereitgestellt wird und einen oder zwei vorstehende Teile (3) aufweist.

9. Wachsbeschichteter Käse nach Anspruch 6, bei dem der Aufreißstreifen (2) an der Oberseite und an einer langgestreckten Seitenwand des Schmelzkäseteils (5) bereitgestellt wird und einen vorstehenden Teil (3) aufweist.

10. Verpackungssystem zum Verpacken eines Käseteils (5), umfassend
(a) eine erste innere Wachsschicht (1), die den Käseteil (5) bedeckt,
(b) eine zweite äußere Wachsschicht (4), die die erste innere Wachsschicht (1) bedeckt,
(c) einen Aufreißstreifen (2) zwischen der ersten inneren und zweiten äußeren Wachsschicht (1, 4), der ausgewählte Teile der ersten inneren Wachsschichten (1) bedeckt und mindestens einen Teil (3) umfasst, der von der ersten inneren und zweiten äußeren Wachsschicht (1, 4) vorsteht, und der eine Haftschicht zum Haften des Aufreißstreifens (2) an der ersten inneren Wachsschicht (1) umfasst.

11. Verpackungssystem nach Anspruch 10, bei dem der Aufreißstreifen (2) überall eine Mehrzahl von Löchern (6) umfasst, durch die die erste innere und zweite äußere Wachsschicht (1, 4) fest verbunden sind.

12. Verpackungssystem nach den Ansprüchen 10 oder 11 zum Verpacken von Schmelzkäse.

13. Verpackungssystem nach einem der Ansprüche 10 bis 12, bei dem die erste innere Wachsschicht (1) ungefärbt ist.

14. Verpackungssystem nach einem der Ansprüche 10 bis 13, bei dem die äußere Wachsschicht (4) gefärbt ist.

15. Verpackungssystem nach einem der Ansprüche 10 bis 14, wobei das Verpackungssystem eine Dreiecksform aufweist.

16. Verpackungssystem nach Anspruch 15, bei dem der Aufreißstreifen (2) auf den drei Seitenwänden des Schmelzkäseteils (5) bereitgestellt wird und einen vorstehenden Teil (3) aufweist.

17. Verpackungssystem nach Anspruch 11, bei dem der Aufreißstreifen (2) auf den zwei langgestreckten Seitenwänden des Schmelzkäseteils (5) bereitgestellt wird und einen oder zwei vorstehende Teile (3) aufweist.

18. Verpackungssystem nach Anspruch 15, bei dem der Aufreißstreifen (2) auf der Oberseite und an einer langgestreckten Seitenwand des Schmelzkäseteils (5) bereitgestellt wird und einen vorstehenden Teil (3) aufweist.

19. Verfahren zum Verpacken eines Käseteils (5), umfassend
(a) Bereitstellen eines Käseteils (5) mit einer ersten inneren Wachsschicht (1),
(b) Platzieren eines Aufreißstreifens (2) über ausgewählten Teilen der ersten inneren Wachsschicht (1), wobei der Aufreißstreifen (2) mindestens einen Teil (3) umfasst, der von der ersten inneren Wachsschicht (1) vorsteht und wobei der Aufreißstreifen (2) eine Haftschicht zum Haften des Aufreißstreifens (2) an der ersten inneren Wachsschicht (2) aufweist,
(c) Aufbringen einer zweiten äußeren Wachsschicht (4) auf der ersten inneren Wachsschicht (1) und dem Aufreißstreifen (2).

20. Verfahren nach Anspruch 19, bei dem der Aufreißstreifen (2) überall eine Mehrzahl von Löchern (6) aufweist, und wobei Schritt (c) unter Bedingungen durchgeführt wird, die ermöglichen, dass die erste innere und zweite äußere Wachsschicht (1, 4) miteinander verschmelzen und eine feste Verbindung durch die Löcher (6) des Aufreißstreifens (2) bilden.

21. Verfahren nach den Ansprüchen 19 oder 20, bei dem der Käseteil (5) ein Schmelzkäseteil (5) ist.

22. Verfahren nach einem der Ansprüche 19 bis 21, bei dem die erste innere Wachsschicht (1) ungefärbt ist.

23. Verfahren nach einem der Ansprüche 19 bis 22, bei dem die zweite äußere Wachsschicht (4) gefärbt ist.

24. Verfahren nach einem der Ansprüche 19 bis 23, bei dem der Schmelzkäseteil (5) eine Dreiecksform aufweist.

25. Verfahren nach Anspruch 24, bei dem der Aufreißstreifen (2) auf den drei Seitenwänden des Schmelzkäseteils (5) bereitgestellt wird und einen vorstehenden Teil (3) aufweist.

26. Verfahren nach Anspruch 24, bei dem der Aufreißstreifen (2) auf den zwei langgestreckten Seitenwänden des Schmelzkäseteils (5) bereitgestellt wird und einen oder zwei vorstehende Teile (3) aufweist.

27. Verfahren nach Anspruch 24, bei dem der Aufreißstreifen (2) auf der Oberseite und an einer langgestreckten Seitenwand des Schmelzkäseteils (5) bereitgestellt wird und einen vorstehenden Teil (3) aufweist.

## Revendications

1. Fromage recouvert de cire comprenant :
(a) une portion de fromage (5),
(b) une première couche de cire interne (1) recouvrant ladite portion de fromage (5),
(c) une seconde couche de cire externe (4) recouvrant ladite première couche de cire interne (1),
(d) une bande de déchirement (2) entre lesdites première couche de cire interne et seconde couche de cire externe (1, 4) recouvrant des parties sélectionnées de ladite première couche de cire interne (1) et comprenant au moins une partie (3) qui fait saillie à partir desdites première couche de cire interne et seconde couche de cire externe (1, 4) et comprenant une couche adhésive pour fixer ladite bande de déchirement (2) sur ladite première couche de cire interne (1).

2. Fromage recouvert de cire selon la revendication 1, dans lequel ladite bande de déchirement (2) comprend une pluralité de trous (6) tout au long de celle-ci, à travers lesquels lesdites première couche de cire interne et seconde couche de cire externe (1, 4) sont fermement raccordées.

3. Fromage recouvert de cire selon les revendications 1 ou 2, dans lequel le fromage est du fromage à tartiner.

4. Fromage recouvert de cire selon l'une quelconque des revendications 1 à 3, dans lequel ladite première couche de cire interne (1) est incolore.

5. Fromage recouvert de cire selon l'une quelconque des revendications 1 à 4, dans lequel ladite seconde couche de cire externe (4) est colorée.

6. Fromage recouvert de cire selon l'une quelconque des revendications 1 à 5, dans lequel ladite portion de fromage (5) a une forme triangulaire.

7. Fromage recouvert de cire selon la revendication 6, dans lequel ladite bande de déchirement (2) est prévue sur les trois parois latérales de ladite portion de fromage (5) et a une partie en saillie (3).

8. Fromage recouvert de cire selon la revendication 6, dans lequel ladite bande de déchirement (2) est prévue au niveau des deux parois latérales allongées de ladite portion de fromage (5) et a une ou deux parties en saillie (3).

9. Fromage recouvert de cire selon la revendication 6, dans lequel la bande de déchirement (2) est prévue au niveau de la partie supérieure et au niveau d'une paroi latérale allongée de ladite portion de fromage à tartiner (5) et a une partie en saillie (3).

10. Système d'emballage pour emballer une portion de fromage (5) comprenant:
(a) une première couche de cire interne (1) recouvrant ladite portion de fromage (5),
(b) une seconde couche de cire externe (4) recouvrant ladite première couche de cire interne (1),
(c) une bande de déchirement (2) entre lesdites première couche de cire interne et seconde couche de cire externe (1, 4) recouvrant des parties sélectionnées de ladite première couche de cire interne (1) et comprenant au moins une partie (3) qui fait saillie à partir desdites première couche de cire interne et seconde couche de cire externe (1, 4) et comprenant une couche adhésive pour fixer ladite bande de déchirement (2) à ladite première couche de cire interne (1).

11. Système d'emballage selon la revendication 10, dans lequel ladite bande de déchirement (2) comprend une pluralité de trous (6) tout au long de celle-ci, à travers lesquels lesdites premières couche de cire interne et seconde couche de cire externe (1, 4) sont fermement raccordées.

12. Système d'emballage selon les revendications 10 ou 11 pour emballer du fromage à tartiner.

13. Système d'emballage selon l'une quelconque des revendications 10 à 12 dans lequel ladite première couche de cire interne (1) est incolore.

14. Système d'emballage selon l'une quelconque des revendications 10 à 13, dans lequel ladite seconde couche de cire externe (4) est colorée.

15. Système d'emballage selon l'une quelconque des revendications 10 à 14, dans lequel ledit système d'emballage a une forme triangulaire.

16. Système d'emballage selon la revendication 15 dans lequel ladite bande de déchirement (2) est prévue sur les trois parois latérales de ladite portion de fromage à tartiner (5) et a une partie en saillie (3).

17. Système d'emballage selon la revendication 11, dans lequel ladite bande de déchirement (2) est prévue sur les deux parois latérales allongées de ladite portion de fromage à tartiner (5) et a une ou deux parties en saillie (3).

18. Système d'emballage selon la revendication 15, dans lequel ladite bande de déchirement (2) est prévue sur la partie supérieure et au niveau d'une paroi latérale allongée de la portion de fromage à tartiner (5) et a une partie en saillie (3).

19. Procédé pour emballer une portion de fromage (5) comprenant les étapes consistant à :
(a) prévoir une portion de fromage (5) avec une première couche de cire interne (1),
(b) placer une bande de déchirement (2) sur des parties sélectionnées de ladite première couche de cire interne (1), dans lequel ladite bande de déchirement (2) comprend au moins une partie (3) qui fait saillie à partir de ladite première couche de cire interne (1) et dans lequel ladite bande de déchirement (2) a une couche adhésive pour fixer ladite bande de déchirement (2) sur ladite première couche de cire interne (1),
(c) appliquer une seconde couche de cire externe (4) sur ladite première couche de cire interne (1) et ladite bande de déchirement (2).

20. Procédé selon la revendication 19, dans lequel ladite bande de déchirement (2) a une pluralité de trous (6) tout au long de celle-ci, et dans lequel l'étape (c) est réalisée dans des conditions qui permettent auxdites première couche de cire interne et seconde couche de cire externe (1, 4) de fondre ensemble afin de former un raccordement ferme à travers lesdits trous (6) de ladite bande de déchirement (2).

21. Procédé selon les revendications 19 ou 20, dans lequel ladite portion de fromage (5) est une portion de fromage à tartiner (5).

22. Procédé selon l'une quelconque des revendications 19 à 21, dans lequel ladite première couche de cire interne (1) est incolore.

23. Procédé selon l'une quelconque des revendications 19 à 22, dans lequel ladite seconde couche de cire externe (4) est colorée.

24. Procédé selon l'une quelconque des revendications 19 à 23, dans lequel ladite portion de fromage fondu (5) a une forme triangulaire.

25. Procédé selon la revendication 24, dans lequel ladite bande de déchirement (2) est prévue sur les trois parois latérales de ladite portion de fromage à tartiner (5) et a une partie en saillie (3).

26. Procédé selon la revendication 24, dans lequel ladite bande de déchirement (2) est prévue sur les deux parois latérales allongées de ladite portion de fromage à tartiner (5) et a une ou deux parties en saillie (3).

27. Procédé selon la revendication 24, dans lequel ladite bande de déchirement (2) est prévue sur la partie supérieure et au niveau d'une paroi latérale allongée de la portion de fromage à tartiner (5) et a une partie en saillie (3).
